# EUROPÄISCHE PATENTSCHRIFT

(11) **EP 1 146 214 B1**
(45) Veröffentlichungstag und Bekanntmachung des Hinweises auf die Patenterteilung: **03.08.2011**
(21) Anmeldenummer: 01108687.3
(22) Anmeldetag: 06.04.2001
(51) Int. Cl.: F02C 9/38, F02C 9/26

(54) **Verfahren zur Zumessung von Kraftstoffen**
Method for controlling fuel supply
Procédé de dosage de carburant

(30) Priorität: 12.04.2000 DE 10018137
(43) Veröffentlichungstag der Anmeldung: 17.10.2001
(73) Patentinhaber: MTU Aero Engines GmbH, 80995 München (DE)
(72) Erfinder: Lietzau, Klaus, 85757 Karlsfeld (DE); Schwamm, Friedrich, 85604 Zorneding (DE)

(56) Entgegenhaltungen:
- EP-A- 0 388 046
- EP-A- 0 481 620
- WO-A-00/23700
- WO-A-02/10569
- WO-A-99/35385
- GB-A- 2 256 729
- GB-A- 2 305 975
- GB-A- 2 307 950
- US-A- 3 958 415
- US-A- 4 578 945
- US-A- 4 608 820
- US-A- 4 656 827
- US-A- 4 736 582
- US-A- 4 817 376
- US-A- 5 513 493
- US-B1- 6 401 446

## Beschreibung

Die Erfindung betrifft ein Verfahren sowie eine Vorrichtung zur Zumessung von Kraftstoffen, insbesondere für Flugtriebwerke.

Traditionell wird die Kraftstoffzumessung insbesondere bei Flugtriebwerken über eine zweistufige Pumpe mit nachgeschalteter Ventillogik realisiert. Die Pumpe wird von der Triebwerkswelle angetrieben. Sie ist für die Kraftstoffzumessung stark überdimensioniert und fördert stets mehr als das Triebwerk selbst bei maximalen Beschleunigungen benötigt.

So offenbart US 5,513,493 ein Verfahren zur Zumessung von Kraftstoffen, bei dem sich der Kraftstofffluss aufteilt in einen Zweig zur Brennkammer, der durch ein Kraftstoffzumeßventils geregelt wird, und einen Rezirkulationsfluß zurück zum Pumpeneingang, der durch ein Rezirkulationsventils geregelt wird. Während die Pumpe nur für einen ausreichenden Kraftstoffdruck sorgt, wird durch das Verstellen der beiden Ventile die eigentliche Kraftstoffzumessung für das Triebwerk geregelt. Dabei wird der Druckabfall über das Kraftstoffzumessventil durch das Rezirkulationsventil konstant gehalten und die Menge an Kraftstoff über die Stellung des Kraftstoffzumessventils gesteuert. Gegenwärtig sind in diesen Ventillogiken mehrere hydromechanische Regelungsfunktionen implementiert, die ursprünglich aus Sicherheitsüberlegungen in dieser Form realisiert wurden.

Die Entwicklung der letzten Jahre hat gezeigt, daß die Hydromechanik immer mehr vereinfacht wurde. Die Hydromechanik einer Kraftstoffzumeßeinheit soll zukünftig nur mehr als Kraftverstärker wirken, während die Regelfunktionen vermehrt elektronisch realisiert werden. Zudem wirkt sich bei einem derartigen Verfahren nachteilig aus, dass durch die Konstanthaltung der Druckdifferenz das Kraftstoffzumessventil und das Rezirkulationsventil beim Übergang auf Notregelung gegeneinander arbeiten und das Öffnen des Rezirkulationsventils eine Verringerung der Druckdifferenz zur Folge hat, was ein Gegensteuern des Kraftstoffzumessventils bewirkt.

Außerdem müssen Kraftstoffzumeßsysteme unempfindlich gegen Fehler einzelner Komponenten sein, um dem Triebwerk sichere Notlaufeigenschaften zu verleihen. Insbesondere verdienen dabei Fehler Aufmerksamkeit, die zu einer unkontrollierten Überschußzumessung von Kraftstoff führen, also etwa das unbeabsichtigte Öffnen des Kraftstoffzumeßventils oder ein vollständiges Schließen des Rezirkulationsventils.

Im Stand der Technik gibt es Kraftstoffzumeßsysteme, die zur Abdeckung der gefährlichsten Fehlfunktion, der unkontrollierten Überschußzumessung durch unbeabsichtigt öffnendes Kraftstoffzumeßventil, über einen zweiten Zweig des Rezirkulationsflusses verfügen, der ein weiteres Regelventil als Notventil umfaßt. Mit ihm wird bei einer defektbedingten Öffnung des Kraftstoffzumeßventils der Differenzdruck ΔP über dem Kraftstoffzumeßventil abgesenkt. Der Kraftstofffluß zur Brennkammer wird reduziert und somit eine gefährliche Überdrehzahl verhindert.

Bei dieser Kraftstoffzumessung werden also drei stufenlos verstellbare Ventile benötigt. Während das Kraftstoffzumeßventil und das Notventil über einen elektrischen Stellmotor und einen Weggeber mit der elektronischen Triebwerksregelung verbunden sind, hat das erste Rezirkulationsventil keinerlei Verbindung zur elektronischen Triebwerksregelung. Die Druckregelung wird im Rezirkulationsventil allein durch hydromechanische Logik durchgeführt.

Das Notventil, das im Rezirkulationsfluß parallel zum Rezirkulationsventil geschaltet ist, soll im fehlerfreien Betrieb stets geschlossen bleiben. Es wird nur angesteuert, wenn das Kraftstoffzumeßventil zu weit öffnet. Mit dem Ansteuern des Notventils wird dann primär der Kraftstoffrezirkulationsfluß vergrößert. Dies bewirkt über die Absenkung der Druckdifferenz über dem Kraftstoffzumeßventil und der damit verringerten Kraftstoffzumessung letztlich die Drehzahlbegrenzung des Triebwerks.

Bei der bekannten Kraftstoffzumessung gibt es verschiedene Hydromechanik-Ausfälle, die ein Abstellen des Triebwerks zur Folge haben können. Wenn das Kraftstoffzumeßventil schließt, stirbt der Motor ab. Gleiches passiert, wenn das Rezirkulationsventil oder das Notventil voll öffnen. Andere Fehler können - zumindest teilweise - kompensiert werden.

Nachteilig bei dieser Lösung ist, daß durch die Parallelschaltung von Rezirkulationsventil und Notventil diese Ventile während des Umschaltvorgangs von Normalregelung auf Notregelung gegeneinander arbeiten. Das Öffnen des Notventils verkleinert den Druckabfall über das Kraftstoffzumeßventil, was ein Gegensteuern des Rezirkulationsventils zur Folge hat. Das Rezirkulationsventil schließt. Erst nachdem das Rezirkulationsventil ganz geschlossen ist, beginnt die Kraftstoffabregelung durch das Notventil zu greifen. Während dieser Totzeit wird relativ viel Überschußkraftstoff der Brennkammer zugeleitet, was einerseits ein Risiko für ein Triebwerksverlöschen darstellt, andererseits in einen maximalen Drehzahlüberschwinger von fast 10 % NL resultieren kann. Wenn das Triebwerk durch den Umschaltvorgang auf die Notregelung verlischt, wird heute bei aktiver Rezirkulationsventil-Regelung ein Wiederzünden des Triebwerks nicht riskiert. Der Grund hierfür ist, daß in diesem Fall die Kraftstoffzumessung nicht genau genug möglich ist, um ein sicheres Starten des Triebwerks zu gewährleisten. Wenn das Triebwerk nicht verlischt, ist die im Betrieb vorkommende mögliche maximale Rotordrehzahl um diese 10 % größer als sie es ohne diesen Überschwinger wäre. Dadurch ist auch der Spielraum für eine Leistungssteigerung des Triebwerks merklich eingeschränkt.

Ein Ausfall des Rezirkulationsventils kann bewirken, daß das Rezirkulationsventil zu weit schließt oder verstopft. Dann stellt sich ein zu großer Differenzdruck am Kraftstoffzumeßventil ein. Damit geht eine Verstärkungsvergrößerung zwischen einer Positionsänderung des Kraftstoffzumeßventils und der Änderung der Kraftstoffzumessung einher. Der Ausfall des Rezirkulationsventils ist für die elektronische Triebwerksregelung jedoch nicht erkennbar. Die elektronische Triebwerksregelung hat keine Selbstadaptionsfähigkeit und kann die vergrößerte Verstärkung des Kraftstoffzumeßventils nicht beheben. Es kann zu einer instabilen Triebwerksregelung kommen.

Da das Notventil bei fehlerfreiem System immer geschlossen bleibt, hat ein Fehler, der ein Öffnen des Notventils verhindert, somit keine direkte Auswirkung auf die Kraftstoffzumessung bei fehlerfreiem Betrieb. Bei einem Defekt des Notventils geht nur der Überdrehzahlschutz verloren, der bei kritischen Ausfällen der Hydromechanik des Kraftstoffzumeßventils benötigt wird. Zur Vermeidung eines unerkannten, schlafenden Fehlers über längere Zeiträume muß nach jedem Betrieb beim Triebwerkabstellen die Funktion des Notventils getestet werden.

WO 00/23700 zeigt ein Kraftstoffzumesssystem, bei dem der Kraftstoff dem Triebwerk über ein Kraftstoffzumessventil zugemessen wird, wobei der Druck durch ein Rezirkulationsventil regelbar ist und die Stellung des Kraftstoffzumessventils und der Druckabfall über das Kraftstoffzumessventil erfasst werden. Bei der Regelung des Rezirkulationsventils wird zudem auch die Stellung des Kraftstoffzumessventils berücksichtigt.

Diese partielle Rückkopplung verhindert jedoch nicht, dass bei einem Ausfall des Rezirkulationsventils ein zu großer Differenzdruck am Kraftstoffzumessventil entsteht und damit eine Verstärkungsvergrößerung zwischen einer Positionsänderung des Kraftstoffzumessventils und der Änderung der Kraftstoffzumessung einhergeht.

Es ist Aufgabe der vorliegenden Erfindung, eine Kraftstoffzumessung für Triebwerke zu schaffen, die auch die vorstehend beschriebenen Fehler kompensieren kann.

Erfindungsgemäß wird ein Verfahren zur Zumessung von Kraftstoffen, insbesondere für Flugtriebwerke, vorgeschlagen, wobei der Kraftstoff von einer Pumpe gefördert und dem Triebwerk durch ein Kraftstoffzumeßventil zugemessen wird, und der Druck, mit dem das Kraftstoffzumeßventil beaufschlagt wird, durch einen Rezirkulationsfluß mit Rezirkulationsventil regelbar ist, das dadurch gekennzeichnet ist, daß der Druckabfall ΔP über das Kraftstoffzumeßventil und die Stellung des Kraftstoffzumessventils erfasst werden und als Steuergröße Eingang in die Regelung des Kraftstoffzumeßventils und des Rezirkulationsventils finden und der Istwert der einer Regelgröße bei der Bestimmung des Sollwerts der anderen Regelgröße berücksichtigt wird.

Im fehlerfreien Betrieb wird das Rezirkulationsventil für die Regelung des Differenzdrucks ΔP über dem Kraftstoffzumeßventil verwendet. Für die Kraftstoffzumessung werden sowohl das Rezirkulationsventil als auch das Kraftstoffzumeßventil als Stellglieder verwendet. Die Meßwerte "Position des Kraftstoffzumeßventils" und "Differenzdruck über dem Kraftstoffzumeßventil ΔP" können sowohl für die Positionierung der zugehörigen Stellglieder (Kraftstoffzumeßventil und Rezirkulationsventil) als auch zur Bestimmung des Sollwertes für die Regelung des jeweils anderen Pfades verwendet werden. Dadurch ergibt sich eine ΔP-Regelung, die im Zusammenspiel mit der Verstellung des Kraftstoffzumeßventils den kommandierten Kraftstofffluß durch ein nahezu weggleiches Verfahren beider Ventile beschleunigt einstellt. Durch die Verknüpfung des Istwertes des einen Pfades mit dem Sollwert des anderen Pfades wird bei einem Kraftstoffzumeßventil-Ausfall (Öffnen oder Klemmen) der ΔP-Sollwert so verändert, daß eine sofortige Kompensation des Kraftstoffzumeßventil-Ausfalls durch das Rezirkulationsventil hinsichtlich der Kraftstoffzumessung kommandiert wird.

Bei einem Ausfall des Rezirkulationsventils (Schließen oder Klemmen) führt das System aufgrund der Sollwert/Istwert-Verknüpfung eine ähnliche Fehlerkompensation durch. Nur wird dann statt dem Rezirkulationsventil das Kraftstoffzumeßventil entsprechend nachgeführt.

Bei der gefährlichsten Fehlfunktion, dem plötzlichen Öffnen des Kraftstoffzumeßventils, wird durch das im elektronischen Regler implementierte Regelgesetz sofort ein Nachführen des Rezirkulationsventils bewirkt. Bei einem festsitzenden Kraftstoffzumeßventil wird die Modulation der Kraftstoffzumessung über die ΔP-Regelung durchgeführt. Die Position des Kraftstoffzumeßventils dient somit nur mehr als Hilfsgröße für die ΔP-Sollwertbildung, und die Dynamik der Kraftstoffzumessung wird sich dabei auf die Dynamik der ΔP-Regelung verringern. Dieser Dynamikverlust stellt jedoch kein Problem für die übergeordnete Triebwerksregelung während der Notregelung dar.

Das wesentliche Ziel dieses Konzepts ist das schnelle Durchgreifen der Regelung auf den Druckabfall am Kraftstoffzumeßventil, um den Überschußkraftstoff zur Brennkammer nur minimal anwachsen zu lassen. Damit kann das Risiko für ein Verlöschen des Triebwerks verringert werden. Außerdem können mögliche Drehzahlüberschwinger des Triebwerks gering gehalten werden.

Vorteil des erfindungsgemäßen Verfahrens ist, daß die Notregelung bei einer ausgefallenen Hydromechanik des Kraftstoffzumeßventils, sofern sie nicht durch ein zu weit geschlossenes Kraftstoffzumeßventil begrenzt wird, annähernd die gleiche Regelungsqualität hat, wie die Normalregelung mit fehlerfreiem System. Dynamik und Störgrößenkompensation reichen für eine uneingeschränkte Triebwerksregelung aus.

Der Ausfall des Rezirkulationsventils durch Schließen oder Klemmen, der bei den bestehenden Systemen eine instabile Triebwerksregelung verursachen kann, bewirkt beim erfindungsgemäßen Verfahren eine sofortige Anpassung der Sollwertbildung für die Positionsregelung des Kraftstoffzumeßventils. Durch diese Anpassung, die aus der oben erklärten Verkoppelung des Regelkreises des Kraftstoffzumeßventils mit der Regelung des Differenzdrucks ΔP resultiert, wird diese Verstärkungsänderung kompensiert. Die Dynamik der Kraftstoffzumessung wird sich zwar etwas verringern, was aber in der Praxis keine Auswirkungen auf die Triebwerksregelung haben wird.

Das erfindungsgemäße Verfahren bietet neben einer reduzierten Komplexität noch den Vorteil einer verbesserten Flexibilität hinsichtlich der Regelgesetze. Zum Beispiel läßt sich dadurch bei gegebener Ventilgeschwindigkeit die Reaktionszeit der Kraftstoffzumessung durch ein simultanes Verstellen beider Ventile verkürzen.

Die Erfindung wird im Folgenden anhand der beigefügten Abbildungen näher erläutert:

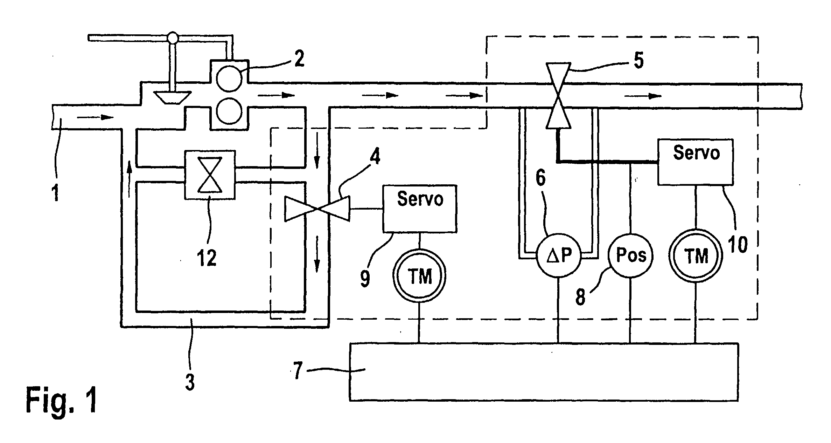

- **Fig. 1**: zeigt schematisch den Aufbau einer erfindungsgemäßen Vorrichtung zur Zumessung von Kraftstoff, insbesondere für Flugtriebwerke;
- **Fig. 2**: zeigt schematisch den Aufbau eine erfindungsgemäßen, redundant aufgebauten Kraftstoffzumeßvorrichtung, wie sie vorzugsweise für einmotorige Flugzeugapplikationen verwendet wird;

Der Kraftstoff wird durch die Kraftstoffzuführleitung **1** mittels einer Kraftstoffpumpe **2** gefördert. Über die Rezirkulationsleitung **3** wird eine mittels Rezirkulationsventil **4** regelbare Kraftstoffmenge nach der Pumpe abgezweigt und in den Kreislauf vor der Pumpe zurückgeführt. Dadurch wird der Differenzdruck ΔP über dem Kraftstoffzumeßventil **5** eingestellt. Der Differenzdruck ΔP ist durch den Differenzdrucksensor **6** meßbar. Der Meßwert wird von der elektronischen Triebwerksregelung **7** erfaßt.

Ein Stellungssensor **8** erfaßt darüber hinaus die Position des Kraftstoffzumeßventils **5** und gibt diesen Wert an die elektronische Triebwerksregelung **7.** Die elektronische Triebwerksregelung **7** verstellt dann das Rezirkulationsventil **4** unter Berücksichtigung des Istwerts des Differenzdrucks ΔP, der auch bei der Bestimmung des Sollwertes für die Stellung des Kraftstoffzumeßventils **5** zugrunde gelegt wird. Die Servos **9**, **10** werden angesteuert und dadurch sowohl die Position des Kraftstoffzumeßventils **5** als auch der Differenzdruck Δp über demselben geregelt. Der vom Kraftstoffzumeßventil **5** dem Triebwerk zugemessene Treibstoff wird über die Kraftstoffleitung **11** dem Triebwerk zugeführt.

Aus Sicherheitsgründen ist parallel zum Rezirkulationsfluß ein Überdruckventil **12** angeordnet, das im Falle eines Überdrucks für die Kraftstoffrückführung sorgt und den maximalen Überdruck am Kraftstoffzumeßventil **5** begrenzt.

Erfindungsgemäß werden sowohl das Rezirkulationsventil **4** als auch das Kraftstoffzumeßventil **5** für die Kraftstoffzumessung als Stellglieder verwendet. Als Meßwerte werden die Stellung des Kraftstoffzumeßventils **5** und der Differenzdruck ΔP über dem Kraftstoffzumeßventil von der elektronischen Triebwerksregelung **7** verarbeitet. Die jeweiligen Stellglieder werden entsprechend der Meßwerte positioniert. Weiter wird daraus der Sollwert für die Regelung des jeweils anderen Pfades verwendet. Dadurch ergibt sich eine ΔP-Regelung, die im Zusammenspiel mit der Verstellung des Kraftstoffzumeßventils **5** den kommandierten Kraftstoffzufluß durch ein nahezu weggleiches Verfahren beider Ventile beschleunigt einstellt. Durch die Verknüpfung des Istwertes des einen Pfades mit dem Sollwert des anderen Pfades wird bei einem Ausfall des Kraftstoffzumeßventils **5** durch Öffnen oder Klemmen der ΔP-Sollwert des Druckabfalls über das Kraftstoffzumeßventil **5** so verändert, daß eine sofortige Kompensation des Ausfalls des Kraftstoffzumeßventils **5** durch das Rezirkulationsventil **4** kommandiert wird.

Bei einem Ausfall des Rezirkulationsventils **4** führt das System aufgrund der Sollwert/Istwert-Verknüpfung eine Fehlerkompensation dadurch herbei, daß statt dem Rezirkulationsventil **4** das Kraftstoffzumeßventil **5** entsprechend nachgeführt wird.

Auch bei vollständiger, automatischer Fehlerkompensation können Fehlfunktionen von der elektronischen Triebwerksregelung **7** durch eine Plausibilitätsprüfung der Meßwerte für den Differenzdruck Δp und für die Position des Kraftstoffzumeßventils **5** erkannt werden. So können schlafende Fehler vermieden und ein sicherer Betrieb garantiert werden.

Die erfindungsgemäße Regelung hat auch im Laufmodus "Notregelung" gegenüber der "Normalregelung" bei fehlerfreiem System keine merklichen Qualitätseinbußen hinsichtlich der Triebwerksregelung.

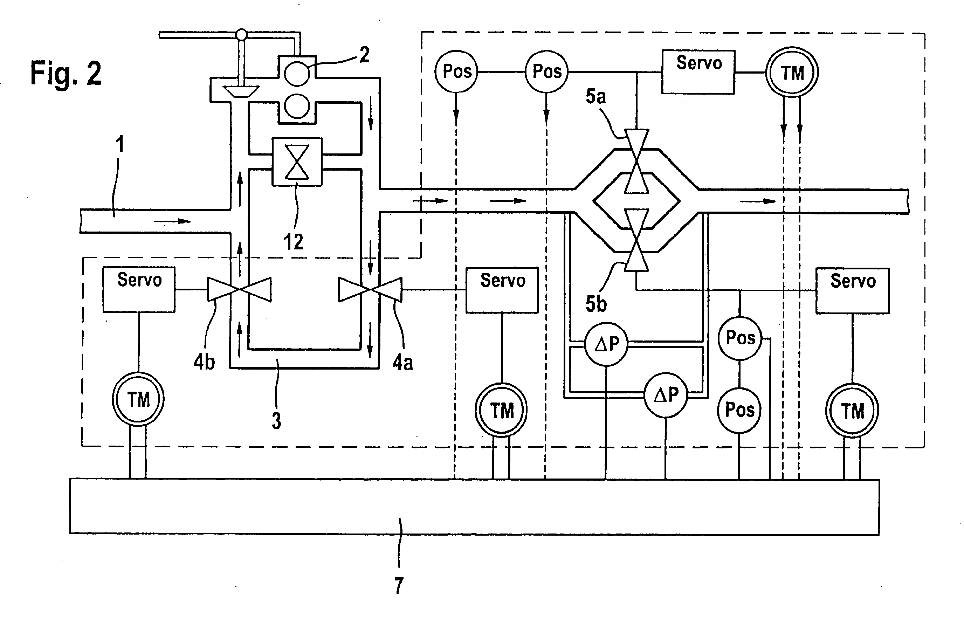

Die in **Fig. 2** gezeigte, erfindungsgemäße Kraftstoffzumeßvorrichtung wird vorzugsweise für einmotorige Flugzeugapplikationen verwendet. Sie basiert auf demselben Konzept wie vorstehend erläutert, ist aber redundant aufgebaut, um auch ein ungewolltes Triebwerk-Abstellen durch einen Erstfehler in der an der Kraftstoffzumessung beteiligten Hardware zu vermeiden. Das Kraftstoffzumeßventil besteht aus zwei parallel geschalteten Ventilen **5a, 5b.** Das Rezirkulationsventil wird ebenfalls durch zwei, allerdings in Reihe geschaltete, kontinuierlich arbeitende Ventile **4a, 4b** ersetzt.

Der ΔP-Sollwert für den Druckabfall über das Kraftstoffzumeßventil **5a, 5b** wird in diesem Fall auf die beiden Regler für die Servos **9a, 9b** der Rezirkulationsventile **4a, 4b** gegeben, wodurch sich diese beiden Ventile in ihrer Wirkung auf den Differenzdruck wie ein einziges Ventil verhalten. Im Fehlerfall - ein Ventil bleibt offen oder öffnet- nimmt das fehlerfreie Ventil allein die Funktion der Druckregelung mit annähernd gleicher Dynamik wahr. Falls also durch einen Defekt das Rezirkulationsventil **4a** beispielsweise öffnet, wird das Rezirkulationsventil **4b** entsprechend schließen, um den geforderten Differenzdruck einzustellen.

Bei der Kraftstoffzumeßventil-Regelung wird im wesentlichen der Positionssollwert je zur Hälfte auf die beiden Ventile **5a, 5b** aufgeteilt. Die Positons-lstwerte werden den beiden Positionsregelungen so aufgeschaltet, daß im fehlerfreien Betrieb beide Ventile etwa die gleiche Position einnehmen und durch ein fehlerbedingtes Schließen des einen Kraftstoffzumeßventils das andere entsprechend weiter öffnet. Sollte das Verstellen des noch funktionierenden Kraftstoffzumeßventils zur vollständigen Fehlerkompensation nicht ausreichen, wird ein Nachstellen der ΔP-Regelung erfolgen, um den Fehlereffekt zu kompensieren.

### Bezugszeichenliste

- 1: Kraftstoffzuführleitung
- 2: Kraftstoffpumpe
- 3: Rezirkulationsleitung
- 4: Rezirkulationsventil
- 5: Kraftstoffzumeßventil
- 6: Differenzdrucksensor
- 7: elektronische Triebwerksregelung
- 8: Positionssensor
- 9: Regelservo Rezirkulationsventil
- 10: Regelservo Kraftstoffzumeßventil
- 11: Kraftstoffleitung
- 12: Überdruckventil

## Patentansprüche

1. Verfahren zur Zumessung von Kraftstoffen, insbesondere für Flugtriebwerke, wobei der Kraftstoff von einer Pumpe (2) gefördert und dem Triebwerk durch ein Kraftstoffzumessventil (5) zugemessen wird, der Druck, mit dem das Kraftstoffzumessventil (5) beaufschlagt wird, durch einen Rezirkulationsfluss (3) mit Rezirkulationsventil (4) regelbar ist und die Stellung des Kraftstoffzumessventils (5) und der Druckabfall ΔP über das Kraftstoffzumessventil (5) erfasst werden, **dadurch gekennzeichnet, dass** der Druckabfall ΔP über das Kraftstoffzumessventil (5) und die Stellung des Kraftstoffzumessventils (5) als Steuergröße Eingang in die Regelung des Kraftstoffzumessventils (5) und des Rezirkulationsventils (4) finden und der Istwert der einen Regelgröße bei der Bestimmung des Sollwerts der anderen Regelgröße berücksichtigt wird.

## Claims

1. Method for metering fuels, in particular for aircraft engines, wherein the fuel is delivered by a pump (2) and metered to the engine by means of a fuel-metering valve (5), the pressure that is applied to the fuel-metering valve (5) can be regulated by means of a recirculation flow (3) with a recirculation valve (4), and the setting of the fuel-metering valve (5) and the pressure drop ΔP across the fuel-metering valve (5) are detected, **characterised in that** the pressure drop ΔP across the fuel-metering valve (5) and the setting of the fuel-metering valve (5) as control variables are entered into the regulation of the fuel-metering valve (5) and the recirculation valve (4), and the actual value of the one regulating variable is taken into consideration when determining the desired value of the other regulating variable.

## Revendications

1. Procédé de dosage de carburant, en particulier pour des groupes moto-propulseurs pour avions, dans lequel le carburant est transporté par une pompe (2) et dosé au groupe moto-propulseur par une soupape de dosage de carburant (5), la pression à laquelle la soupape de dosage de carburant (5) est soumise peut être régulée par un flux de recirculation (3) avec une soupape de recirculation (4) et on détecte la position de la soupape de dosage de carburant (5) et la chute de pression ΔP à travers la soupape de dosage de carburant (5), **caractérisé en ce que** la chute de pression ΔP à travers la soupape de dosage de carburant (5) et la position de la soupape de dosage de carburant (5) sont introduites comme grandeurs de commande dans la régulation de la soupape de dosage de carburant (5) et de la soupape de recirculation (4) et on tient compte de la valeur réelle d'une première grandeur réglée pour déterminer la valeur de consigne de l'autre grandeur réglée.
